Europäisches Patentamt

European Patent Office

Office européen des brevets

(11) Veröffentlichungsnummer: **0 470 971 B1**

(12) **EUROPÄISCHE PATENTSCHRIFT**

(45) Veröffentlichungstag der Patentschrift: **22.06.94**

(51) Int. Cl.5: **G11B 19/22**

(21) Anmeldenummer: **90906209.3**

(22) Anmeldetag: **23.04.90**

(86) Internationale Anmeldenummer: **PCT/EP90/00649**

(87) Internationale Veröffentlichungsnummer: **WO 90/13894 (15.11.90 90/26)**

(54) **AUFNAHME- UND/ODER WIEDERGABEGERÄT FÜR BERÜHRUNGSLOS ABTASTBARE ROTIERENDE AUFZEICHNUNGSTRÄGER.**

(30) Priorität: **03.05.89 DE 3914587**

(43) Veröffentlichungstag der Anmeldung:
**19.02.92 Patentblatt 92/08**

(45) Bekanntmachung des Hinweises auf die
Patenterteilung:
**22.06.94 Patentblatt 94/25**

(84) Benannte Vertragsstaaten:
**AT BE CH DE DK ES FR GB IT LI LU NL SE**

(56) Entgegenhaltungen:
**FR-A- 2 470 506**
**US-A- 4 417 288**

**PATENT ABSTRACTS OF JAPAN Vol. 4, No. 82 (p-15)(564) 13 June 1980, &Jp-A-55 045126**

**PATENT ABSTRACTS OF JAPAN Vol. 9, No. 48 (p-338)(1771)28 February 1985 & JP-A-59 186174**

**PATENT ABSTRACTS OF JAPAN; Vol. 5, No.**

73 (P-61)(745) **15 May 1981**

(73) Patentinhaber: **Deutsche Thomson-Brandt GmbH**
**Hermann-Schwer-Strasse 3**
**Postfach 1307**
**D-78003 Villingen-Schwenningen(DE)**

(72) Erfinder: **KÜHN, Hans, Robert**
**Haydnweg 9**
**D-7742 St. Georgen(DE)**

## Beschreibung

Die Erfindung betrifft ein Aufnahme- und/oder Wiedergabegerät für berührungslos abtastbare rotierende Aufzeichnungsträger.

Derartige Geräte, z.B. CD-Spieler oder Videoplattenspieler, sind mit einer Lade- und Entladevorrichtung ausgestattet, in die der Aufzeichnungsträger, eine CD-Platte oder eine Videoplatte, von Hand eingelegt und aus der er von Hand wieder entnommen werden kann. Nach dem Einlegen wird die CD-Platte automatisch in die Abspielposition gebracht. Mittels einer sogenannten STOP-Taste kann der Bediener des CD-Spielers jederzeit das Abspielen einer CD-Platte unterbrechen. Die CD-Platte wird angehalten und automatisch in die Entnahmeposition gebracht, damit sie der Bediener aus der Ladevorrichtung entnehmen kann, um z.B. eine andere CD-Platte einlegen zu können.

In Funkschau 10, Mai 1985 ist auf Seite 50 bis 54 ein Testbericht über zwei CD-Spieler vom sogenannten Schubladentyp veröffentlicht. Die Lade- und Entladevorrichtung ist bei diesem Typ als Schublade ausgeführt, die zum Einlegen und zur Entnahme einer CD-Platte aus der Frontseite des CD-Spielers gefahren wird. Die in dem genannten Testbericht beurteilten CD-Spieler sind auch mit der erwähnten STOP-Taste ausgerüstet.

Bevor jedoch die CD-Platte aus der Abspielposition in die Entnahmeposition gebracht wird, sollte sie vom Motor des Plattenantriebs möglichst bis zum Stillstand abgebremst werden, um Beschädigungen ihrer empfindlichen Oberfläche während des Entladevorgangs zu vermeiden.

Die Drehzahl einer CD-Platte ist aber nicht konstant, weil es sich bei einem CD-Spieler um ein System handelt, das im Gegensatz zu einem CAV-System, der Abkürzung für Constant-Angular-Velocity, nicht die Winkel-, sondern wie bei einem CLV-System - der Abkürzung für Constant-Linear-Velocity - üblich die Bahngeschwindigkeit konstant hält.

Es kann daher durchaus der Fall auftreten, daß sich die CD-Platte während des Entladevorgangs noch dreht, entweder in der Abspielrichtung oder sogar rückwärts, je nach dem, ob sie vom Motor des Plattenantriebs zu wenig oder zu stark abgebremst wurde. Wie bereits erwähnt kann aber die empfindliche Oberfläche einer CD-Platte, die sich während des automatischen Entladevorgangs noch dreht, leicht beschädigt werden.

Um sicher zu stellen, daß die CD-Platte zu Beginn des Entladevorgangs tatsächlich still steht, sollte daher zwischen dem Abbremsen der CD-Platte und dem Entladevorgang eine kurze Wartezeit als zeitlicher Sicherheitsabstand vorgesehen werden, damit die CD-Platte auslaufen kann. Diese Maßnahme hat aber den Nachteil, daß sich der Entladevorgang verzögert.

Aus der FR-A 2470506 ist es bekannt, ein Bremssignal mit einem festen Wert an den Motor des Plattenantriebs zu legen, um die Platte eines Plattenspielers z.B. eines Videoplattenspielers anzuhalten. Eine Meßvorrichtung mißt die Drehzahl der Platte während des Abbremsens. Sobald die Platte auf eine vorgegebene Drehzahl, z.B. null, abgebremst ist, wird der Bremsvorgang beendet.

Es ist daher Aufgabe der Erfindung, ein Aufnahme- und/oder Wiedergabegerät für berührungslos abtastbare rotierende Aufzeichnungsträger so zu gestalten, daß der rotierende Aufzeichnungsträger zur Entnahme schnell und sicher bis zum Stillstand abgebremst wird.

Die Erfindung löst diese Aufgabe dadurch, daß die zum Anhalten des rotierenden Aufzeichnungsträgers erforderliche Bremsenergie auch in Abhängigkeit vom Durchmesser des Aufzeichnungsträgers erzeugt wird.

Es zeigen

Figur 1     eine Anordnung zur Erzeugung von Bremsimpulsen in Abhängigkeit von der Drehzahl des Aufzeichnungsträgers

Figur 2     ein Teil eines ersten Ausführungsbeispiels

Figur 3     das erste Ausführungsbeispiel mit einer Lichtschranke

Figur 4     ein zweites Ausführungsbeispiel

Figur 5     Impulsdiagramme zum zweiten Ausführungsbeispiel.

Die Abbremsung des rotierenden Aufzeichnungsträgers kann z.B. mittels eines oder mehrerer Bremsimpulse, die an den Motor des Plattenantriebs gelegt werden, erfolgen. Die Dauer und/oder die Amplitude der Bremsimpulse hängen von der Drehzahl des Aufzeichnungsträgers ab, die sich z.B. mittels einer Marke und eines Photosensors ermitteln läßt. Bei CD-Spielern und Videoplattenspielern besteht außerdem die Möglichkeit, die Drehzahl der Platte aus dem Subcode, der Informationen über die sogenannte kumulierte Abspielzeit enthält, zu berechnen. Zu jeder kumulierten Abspielzeit, die häufig auch als A-Time bezeichnet wird, gehört eine bestimmte Drehzahl der CD-Platte oder der Videoplatte.

Die Drehzahl n berechnet sich nach folgender Formel:

$$n = w_1 - (w_1 - w_2)A/T.$$

$w_1$ ist die Anfangsdrehzahl, $w_2$ die Enddrehzahl, T die gesamte Spielzeit der Platte und A die sogenannte kumulierte Abspielzeit. Bei einer CD-Platte beträgt die Anfangsdrehzahl beim Lesen der innersten Datenspur 500 U/min. Während des Abspielens einer CD-Platte sinkt die Anfangsdrehzahl von 500 U/min beim Lesen der innersten Datenspur linear auf die Enddrehzahl von 215 U/min ab, die zum Lesen der Daten von der äußersten Datenspur vorgeschrieben ist. Bei einer CDV-Platte, die neben einem Audioteil noch einen Videoteil enthält, beträgt die Anfangsdrehzahl für den Videoteil 2700 U/min, während sich die CDV-Platte beim Lesen der äußersten Datenspur des Videoteils nur noch mit 2000 U/min dreht. Bei einer CDV-Platte kann daher die Drehzahl entweder zwischen 500 U/min und 200 U/min betragen oder zwischen 2700 U/min oder 2000 U/min liegen, je nachdem ob der Audioteil oder der Videoteil abgespielt wird. Trotz dieser großen Drehzahlunterschiede sollte aber auch eine CDV-Platte zur Entnahme stets zum Stillstand abgebremst werden.

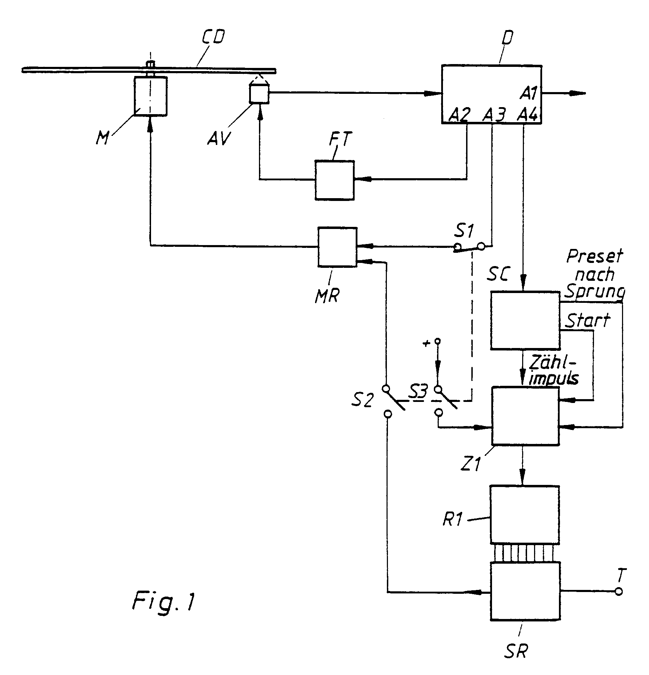

In der Figur 1 ist nun eine Anordnung gezeigt, bei der die Bremsimpulse für den Motor des Plattenantriebs in Abhängigkeit von der augenblicklichen Drehzahl einer CD-Platte erzeugt werden.

Von einer CD-Platte CD, die von einem Motor M angetrieben wird, werden mittels einer optischen Abtastvorrichtung AV Daten gelesen und einem Decoder D zugeführt. An seinem ersten Ausgang A1 gibt der Decoder D das Audiosignal ab. An seinem zweiten Ausgang A2 gibt der Decoder D die Regelsignale für die Regler FT des Fokus- und Spurregelkreises ab. Der dritte Ausgang A3, an dem der Decoder D das Regelsignal für die Plattendrehzahl abgibt, ist über einen Schalter S1 mit dem Drehzahlregler MR des Motors M verbunden. Der vierte Ausgang A4 des Decoders D, an dem der Subcode abnehmbar ist, ist mit einer Auswerteschaltung SC verbunden, deren Ausgang mit dem Eingang eines Zählers Z1 verbunden ist.

Die Auswerteschaltung SC liefert für den Zähler Z1 Zählimpulse, die der kumulierten Abspielzeit entsprechen. Wird die CD-Platte von Anfang an abgespielt, so setzt die Auswerteschaltung SC den Zählerstand des Zählers Z1 auf null und gibt anschließend Zählimpulse ab, so daß der jeweilige Zählerstand stets ein Maß für die kumulierte Abspielzeit und somit auch für die augenblickliche Plattendrehzahl ist.

Wird aber die CD- Platte nicht von Anfang an, sondern z.B. erst vom siebten Musikstück an abgespielt, so erkennt die Auswerteschaltung SC am Subcode die kumulierte Abspielzeit; das ist die Zeit nach der das siebte Musikstück beim Abspielen von Anfang an gerechnet beginnt. Die Auswerteschaltung SC lädt nun den Zähler Z1 auf den Zählerstand, welcher der kumulierten Abspielzeit für das siebte Musikstück entspricht. Beim Spurspringen von einem Musikstück zu einem anderen aktualisiert die Auswerteschaltung SC jedesmal den Zählerstand. Der Zählerstand ist daher stets proportional zur Umdrehungsgeschwindigkeit der CD-Platte.

Die Ausgänge des Zählers Z1 sind mit den Eingängen eines ROM R1 verbunden, dessen Ausgänge mit einem Schieberegister SR verbunden sind. Der Ausgang des Schieberegisters SR ist über einen Schalter S2 mit dem Drehzahlregler MR des Motors M verbunden.

Der Stopeingang des Zählers Z1 kann über einen Schalter S3 mit dem positiven Pol einer Spannungsquelle verbunden werden.

Solange die CD-Platte abgespielt wird, ist der Schalter S1 geschlossen, die Schalter S2 und S3 sind dagegen geöffnet. Wenn nun der Bediener die eingelegte CD-Platte aus dem CD-Spieler entnehmen möchte, werden gleichzeitig mit dem Drücken der sogenannten STOP-Taste die Schalter S2 und S3 geschlossen, während der Schalter S1 geöffnet wird. Durch Schließen des Schalters S3 wird der Zähler Z1 angehalten. Sein Zählerstand dient jetzt als Adresse für das ROM R1 , in dem verschiedene Bit-Muster gespeichert sind. Mittels des Schieberegisters SR wird nun das zum Zählerstand gehörende Bit-Muster als einzelner Bremsimpuls oder eine Folge mehrerer Bremsimpulse an den Drehzahlregler MR des Motors M gegeben, um die CD-Platte mit der richtig dosierten Bremsenergie sicher und schnell zum Stillstand zu bringen. Die im ROM R1 gespeicherten Bit-Muster, welche die Länge und Anzahl der Bremsimpulse festlegen, können z.B. empirisch ermittelt werden.

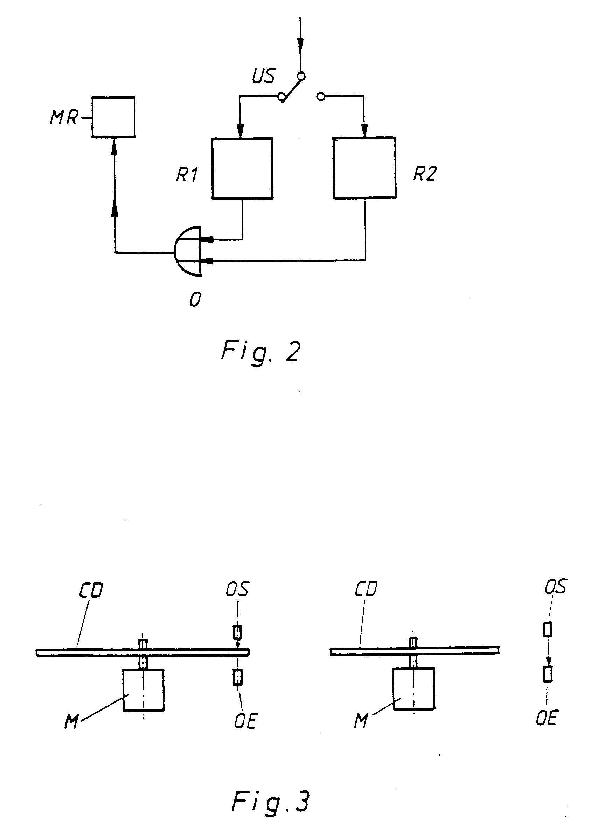

Bei einem ersten Ausführungsbeispiel der Erfindung ist nun ein zweites ROM R2 vorgesehen. Mittels eines Umschalters US ist der Ausgang des Zählers Z1 entweder mit dem Eingang des ersten ROM R1 oder des zweiten ROM R2 verbindbar, wie Figur 2 zeigt. Die Ausgänge der beiden ROM R1 und R2 sind mit den Eingängen eines ODER-Gatters O verbunden, an dessen Ausgang die Bremsimpulse für den Drehzahlregler MR des Motors M des Plattenantriebs abnehmbar sind. Bei einem CD-Spieler sind z.B. im ersten ROM R1 die Bit-Muster für eine normale CD-Platte gespeichert, im zweiten ROM R1 dagegen die Bit-Muster für eine Mini-CD. Die Umschaltung vom ersten auf das zweite ROM und umgekehrt kann entweder von Hand oder automatisch erfolgen. Der Durchmesser der CD-Platte CD läßt sich, wie in Figur 3 dargestellt ist, z.B. mittels einer Lichtschranke aus einem optischen Sender OS und einem optischen Empfänger OE ermitteln.

Um eine sogenannte Mini-CD, die einen geringeren Durchmesser als eine normale CD-Platte hat, zum Stillstand abzubremsen, ist - gleiche Drehzahl vorausgesetzt - infolge der geringeren Masse weniger Bremsenergie als bei der größeren normalen CD-Platte nötig.

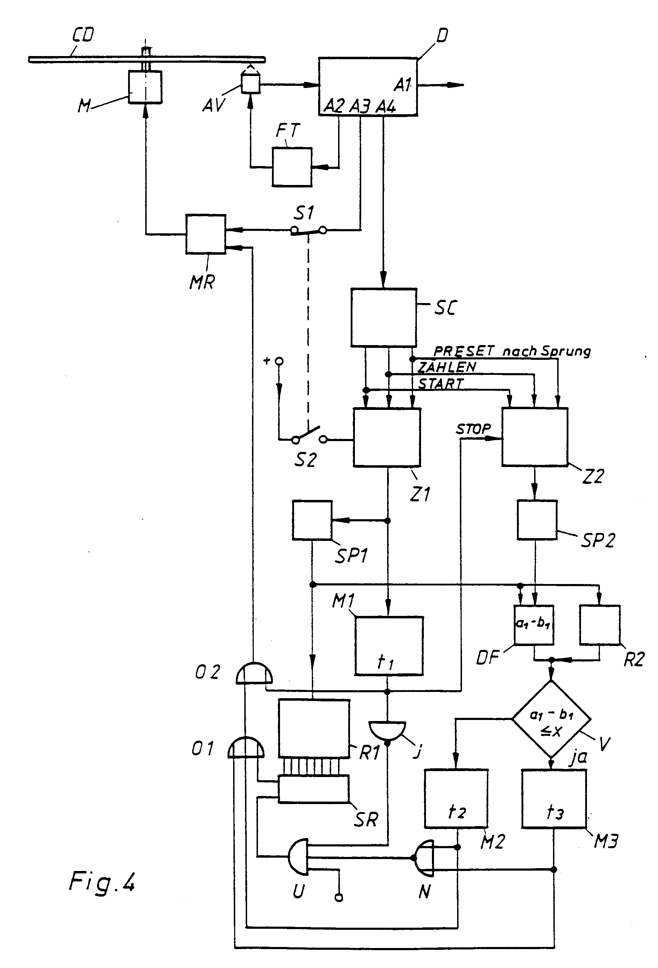

Bei einem zweiten Ausführungsbeispiel, das in Figur 4 gezeigt ist, wird daher neben der Drehzahl auch die Masse der Platte berücksichtigt. Hierzu wird ein Testbremsimpuls auf den Motor M gegeben, der so bemessen ist, daß die CD-Platte CD zwar abgebremst, die Datenwiedergabe aber dadurch nicht beeinträchtigt wird. Es werden die Drehzahlen vor und nach dem Testbremsimpuls gemessen und miteinander verglichen. Der Vergleich dient nun als Grundlage zur Bestimmung der Dauer der Bremsimpulse.

In der Figur 4 wird die CD-Platte CD wie beim ersten Ausführungsbeispiel vom Motor M angetrieben, dessen Drehzahl vom Drehzahlregler MR geregelt wird. Die optische Abtastvorrichtung AV liefert das Datensignal an den Decoder D, an dessen Ausgang A1 das Audiosignal abnehmbar ist, dessen Ausgang A2 mit den Reglern FT des Fokus- und Spurregelkreises, dessen Ausgang A3 über den Schalter S1 mit dem Drehzahlregler MR und dessen Ausgang A4 mit der Auswerteschaltung SC verbunden ist. Die Ausgänge der Auswerteschaltung SC sind mit dem Zähler Z1 und einem Zähler Z2 verbunden. Mittels des Schalters S2 kann eine positive Spannung an den Stop-Eingang des Zählers Z1 gelegt werden. Die Ausgänge des Zählers Z1 sind mit einem Speicher SP1 und einem Monoflop M1 verbunden. Die Ausgänge des Zählers Z2 sind mit den Eingängen eines Speichers SP2 verbunden, dessen Ausgang mit einem Differenzbildner DF verbunden sind. Die Ausgänge des Speichers SP1 sind ebenfalls mit dem Differenzbildner DF und mit dem ROM R1 verbunden, dessen Ausgänge mit dem Schieberegister SR verbunden sind. Der Ausgang des Differenzbildners DF ist mit dem Eingang eines Vergleichers V verbunden, dessen erster Ausgang mit einem Monoflop M2 und dessen zweiter Ausgang mit einem Monoflop M3 verbunden ist. Der Ausgang des Monoflops M2 ist mit dem ersten Eingang, der Ausgang des Monoflops M3 mit dem zweiten Eingang eines NOR-Gatters N und eines ODER-Gatters O1 verbunden. Der Ausgang des NOR-Gatters N ist mit dem ersten Eingang eines UND-Gatters U verbunden. Der Ausgang des Monoflops M1 ist mit dem ersten Eingang eines ODER-Gatters O2, dem Stop-Eingang des Zählers Z2 und über einen Inverter I mit dem zweiten Eingang des UND-Gatters U verbunden, an dessen drittem Eingang ein Takt T liegt. Der Ausgang des UND-Gatters U ist mit dem Takteingang des Schieberegisters SR verbunden, dessen Ausgang mit dem dritten Eingang des ODER-Gatters O1 verbunden ist. Der Ausgang des ODER-Gatters O2, dessen zweiter Eingang mit dem Ausgang des UND-Gatters U verbunden ist, ist mit dem Drehzahlregler MR verbunden.

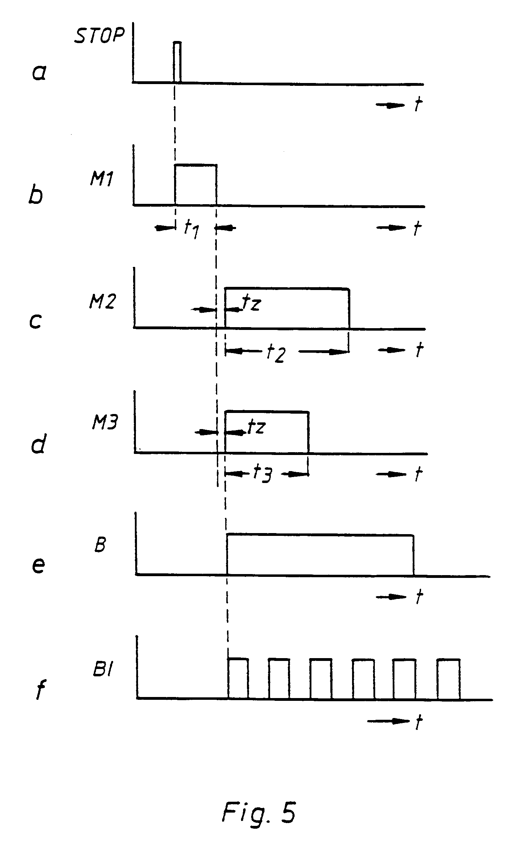

Anhand der in Figur 5 gezeigten Impulsdiagramme wird nun das zweite in Figur 4 gezeigte Ausführungsbeispiel der Erfindung erläutert.

Während des Spielbetriebs wird wie beim ersten Ausführungsbeispiel der Zählerstand des Zählers Z1 von der Auswerteschaltung ständig aktualisiert, so daß er stets zur augenblicklichen Plattendrehzahl proportional ist. Wenn der Bediener die STOP-Taste drückt, wie in Figur 5a angedeutet ist, wird gleichzeitig der Schalter S1 geöffnet, der Schalter S2 dagegen geschlossen. Dadurch wird der Zähler Z1 angehalten und sein Zählerstand vom Speicher SP1 übernommen. Die Drehzahl vor dem Testbremsimpuls wird daher im Speicher SP1 gespeichert. Weil außerdem das Monoflop M1 für die Zeit $t_1$ gesetzt wird, erhält der Motor M jetzt einen Testbremsimpuls für die Dauer $t_1$, wie in Figur 5b gezeigt ist. Gleichzeitig wird wegen des Inverters I und des UND-Gatters U das Schieberegister SR gesperrt. Wenn nach der Zeit $t_1$ das Monoflop M1 in seinen stabilen Zustand zurückkippt, wird der Zähler Z2 angehalten, dessen Zählerstand aber der infolge des Testbremsimpulses verringerten Drehzahl entspricht. Der Zählerstand des Zählers Z2 wird vom Speicher SP2 übernommen. Im Differenzbildner DF wird die Differenz der Zählerstände der beiden Zähler Z1 und Z2 gebildet und im Vergleicher V mit einem vorgebbaren Schwellwert X verglichen. Die Zeit, die der Differenzbildner DF zur Bildung der Differenz der beiden Zählerstände und der Vergleicher V für den Vergleich benötigen, ist in den Figuren 5c und 5d mit $t_z$ bezeichnet.

Liegt die Differenz über dem Schwellwert X, so wird das Monoflop M2 gesetzt, andernfalls das Monoflop M3, dessen Zeitkonstante $t_3$ kleiner gewählt ist als die Zeitkonstante $t_2$ des Monoflops M2. Durch das Setzen des Monoflops M2 oder des Monoflops M3 wird das Schieberegister SR freigegeben, so daß nun wie beim ersten Ausführungsbeispiel ein Bremsimpuls oder mehrere Bremsimpulse an den Motor M abgegeben werden. Nach der Zeit $t_2$ bzw. $t_3$ kippt das Monoflop M2 bzw. M3 wieder in die stabile Ausgangslage zurück, wodurch das Schieberegister SR wieder vom UND-Gatter U gesperrt wird.

In Figur 5c ist das Ausgangssignal des Monoflops M2, in Figur 5d des Monoflops M3 gezeigt. In Figur 5e ist ein Bremsimpuls B dargestellt, der abgegeben wird, wenn das Monoflop M3 gesetzt ist. Figur 5f zeigt mehrere Bremsimpulse BI, die vom Schieberegister SR abgegeben werden, solange das Monoflop M2 gesetzt ist. Es ist möglich, während das Monoflop M2 bzw. M3 gesetzt ist, entweder nur einen längeren Bremsimpuls oder mehrere Bremsimpulse geringerer Dauer abzugeben.

Anstelle des einen Vergleichers V können z.B. mehrere Vergleicher vorgesehen werden, um mehrere Intervalle zu bilden. Mittels der Vergleicher wird festgestellt, in welchem Intervall die vom Differenzbildner DF gebildete Differenz liegt. Für jedes Intervall ist dann ein Monoflop vorgesehen. Dadurch, daß immer das Monoflop gesetzt wird, in dessen Intervall die Differenz fällt, werden unterschiedliche Bremsimpulse erzeugt.

Der zweite Zähler Z2 kann beim dritten Ausführungsbeispiel auch entfallen. Nachdem der Speicher SP1 den Zählerstand des Zählers Z1 vor dem Testbremsimpuls übernommen hat, zählt der Zähler Z1 weiter. Am Ende des Testbremsimpulses übernimmt der Speicher SP2 den neuen Zählerstand des Zählers Z1, welcher der durch den Testbremsimpuls verringerten Drehzahl entspricht.

Ein drittes Ausführungsbeispiel stellt eine Kombination aus der in Figur 1 gezeigten Anordnung und dem ersten Ausführungsbeispiel dar. Der augenblickliche Zählerstand des Zählers Z1, der proportional zur augenblicklichen Drehzahl der Platte ist, wird mit einem vorgebbaren Schwellwert verglichen. Liegt der Zählerstand unter diesem Schwellwert - oder mit anderen Worten ausgedrückt, liegt die Drehzahl unter einem Schwellwert -, so wird der Bremsimpuls bzw. werden die Bremsimpulse mittels des ROM R1 und des Schieberegisters SR, wie in Figur 1 dargestellt ist, erzeugt.

Ist der Zählerstand des Zählers Z1 dagegen größer gleich dem Schwellwert - die Drehzahl ist dann ebenfalls größer gleich einem Schwellwert -, so wird zuerst ein Testbremsimpuls abgegeben und anschließend wird ein oder werden mehrere Bremsimpulse mittels des Monoflops M2 bzw. M3 gemäß dem in Figur 2 gezeigten Ausführungsbeispiel erzeugt.

Die Erfindung ist z.B. für CD-Spieler, Videoplattenspieler, CDV-Spieler, DRAW-Disc-Spieler oder magneto-optische Geräte geeignet.

**Patentansprüche**

1. Aufnahme- und/oder Wiedergabegerät für berührungslos abtastbare rotierende Aufzeichnungsträger, wobei die zum Anhalten des rotierenden Aufzeichnungsträgers erforderliche Bremsenergie in Abhängigkeit von der Drehzahl des Aufzeichnungsträgers erzeugt wird, **dadurch gekennzeichet**, daß die zum Anhalten des rotierenden Aufzeichnungsträgers erforderliche Bremsenergie auch in Abhängigkeit vom Durchmesser des Aufzeichnungsträgers erzeugt wird.

2. Aufnahme- und/oder Wiedergabegerät nach Anspruch 1, **dadurch gekennzeichnet**, daß ein Testbremsimpuls an den Motor (M) des Plattenantriebs gegeben wird, der so bemessen ist, daß er zwar die Drehzahl des Aufzeichnungsträgers (CD) verringert, aber die Datenwiedergabe noch nicht stört, daß die Drehzahl vor dem Testbremsimpuls und nach dem Testbremsimpuls gemessen wird und daß der Bremsimpuls in Abhängigkeit von einem Vergleich der Drehzahl vor dem Testbremsimpuls mit der Drehzahl nach dem Testbremsimpuls erzeugt wird.

3. Aufnahme- und/oder Wiedergabegerät nach Anspruch 1 oder 2, **dadurch gekennzeichnet**, daß bei einem CD-Spieler, einem Videoplattenspieler oder einem CDV-Spieler die Drehzahl der Platte aus dem auf ihr aufgezeichneten Subcode gewonnen wird.

4. Aufnahme- und/oder Wiedergabegerät nach Anspruch 3, **dadurch gekennzeichnet**, daß ein Zähler (Z1) die aus dem Subcode gewonnene Abspielzeit addiert, so daß der augenblickliche Zählerstand stets zur augenblicklichen Drehzahl des Aufzeichnungsträgers (CD) proportional ist, daß zum Anhalten des Aufzeichnungsträgers (CD) der Zähler (Z1) angehalten und sein Zählerstand als Adresse für ein erstes ROM (R1) dient, in dem Bit-Muster gespeichert sind, die als Bremsimpulse von einem Schieberegister (SR) an den Motor (M) des Plattenantriebs abgegeben werden.

5. Aufnahme- und/oder Wiedergabegerät nach Anspruch 4, **dadurch gekennzeichnet**, daß der Zählerstand des Zählers (Z1) als Adresse für ein zweites ROM (R2) dient, wenn er einen vorgebbaren Schwellwert überschreitet, daß die im zweiten ROM (R2) gespeicherten Bit-Muster als Bremsimpulse vom Schieberegister (SR) an den Motor (M) des Plattenantriebs gegeben werden.

6. Aufnahme- und/oder Wiedergabegerät nach Anspruch 2 und 3, **dadurch gekennzeichnet**, daß ein Zähler (Z1) die aus dem Subcode gewonnene Abspielzeit addiert, so daß sein augenblicklicher Zählerstand stets der augenblicklichen Drehzahl des Aufzeichnungsträgers (CD) entspricht, daß sein Zählerstand von einem ersten Speicher (SP1) übernommen wird, wenn der Testbremsimpuls durch Setzen eines ersten Monoflops (M1) erzeugt wird, daß am Ende des Testbremsimpulses, wenn das erste Monoflop (M1) zurückkippt, der Zählerstand des Zählers (Z1) von einem zweiten Speicher (SP2) übernommen wird, daß die in den beiden Speichern (SP1, SP2) stehenden Zählerstände in einem Differenzbildner (DF) voneinander subtrahiert werden, daß ein zweites Monoflop (M2) gesetzt wird, wenn die Differenz der Zählerstände unter einem vorgebbaren Schwellwert (X) liegt, daß ein drittes Monoflop (M3) gesetzt wird, wenn die Differenz der Zählerstände größer gleich dem vorgebbaren Schwellwert (X) ist, und daß entweder das zweite oder das dritte Monoflop (M2, M3) ein Schieberegister (SR) freigibt, das Bit-Muster aus einem ROM (R1) liest und als Bremsimpulse an den Motor (M) des Plattenantriebs gibt.

7. Aufnahme- und/oder Wiedergabegerät nach Anspruch 2 und 3, **dadurch gekennzeichnet**, daß ein erster und ein zweiter Zähler (Z1, Z2) die aus dem Subcode gewonnene Abspielzeit addiert, so daß die augenblicklichen Zählerstände stets der augenblicklichen Drehzahl des Aufzeichnungsträgers (CD) entsprechen, daß der Zählerstand des ersten Zählers (Z1) von einem ersten Speicher (SP1) übernommen wird, wenn der Testbremsimpuls durch Setzen eines ersten Monoflops (M1) erzeugt wird, daß am Ende des Testbremsimpulses, wenn das erste Monoflop (M1) zurückkippt, der Zählerstand des zweiten Zählers (Z2) von einem zweiten Speicher (SP2) übernommen wird, daß die in den beiden Speichern (SP1, SP2) stehenden Zählerstände in einem Differenzbildner (DF) voneinander subtrahiert werden, daß ein zweites Monoflop (M2) gesetzt wird, wenn die Differenz der Zählerstände unter einem vorgebbaren Schwellwert (X) liegt, daß ein drittes Monoflop (M3) gesetzt wird, wenn die Differenz der Zählerstände größer gleich dem vorgebbaren Schwellwert (X) ist, und daß entweder das zweite oder das dritte Monoflop (M2, M3) ein Schieberegister (SR) freigibt, das Bit-Muster aus einem ROM (R1) liest und als Bremsimpulse an den Motor (M) des Plattenantriebs gibt.

8. Aufnahme- und/oder Wiedergabegerät nach Anspruch 4 oder 5 und 6 oder 7, **dadurch gekennzeichnet**, daß die Bremsimpulse gemäß Anspruch 6 oder 7 erzeugt werden, wenn der Zählerstand des Zählers (Z1) unter einem vorgebbaren Schwellwert liegt, daß die Bremsimpulse dagegen gemäß Anspruch 8 oder 9 erzeugt werden, wenn der Zählerstand des Zählers (Z1) größer gleich dem vorgebbaren Schwellwert ist.

**Claims**

1. A recording and/or reproduction device for rotating recording media which can be scanned in a contactless manner, wherein the braking energy required for stopping the rotating recording medium is produced in dependence upon the rotational speed of the recording medium, characterised in that the braking energy required for stopping the rotating recording medium is also produced in dependence upon the diameter of the recording medium.

2. A recording and/or reproduction device according to claim 1, characterised in that a test braking pulse is supplied to the motor (M) of the disc drive, which is dimensioned so that it indeed reduces the rotational speed of the recording medium (CD), but does not disturb the reproduction of data, that the rotational speed is measured before the test braking pulse and after the test braking pulse and that the braking pulse is produced in dependence upon a comparison of the rotational speed before the test braking pulse with the rotational speed after the test braking pulse.

3. A recording and/or reproduction device according to claim 1 or 2, characterised in that in the case of a CD-player, a video disc player or a CDV-player, the rotational speed of the disc is obtained from the subcode recorded thereon.

4. A recording and/or reproduction device according to claim 3, characterised in that a counter (Z1) adds the playing time obtained from the subcode, so that the momentary counter state is always proportional to the momentary rotational speed of the recording medium (CD), that for stopping the recording medium (CD) the counter (Z1) is stopped and its counter state serves as the address for a first ROM (R1), in which bit-samples are stored, which are supplied as braking pulses by a shift register (SR) to the motor (M) of the disc drive.

5. A recording and/reproduction device according to claim 4, characterised in that the counter state of the counter (Z1) serves as the address for a second ROM (R2), when it exceeds a predetermined threshold value, that the bit-samples stored in the second ROM (R2) are supplied as braking pulses by the shift register (SR) to the motor (M) of the disc drive.

6. A recording and/or reproduction device according to claim 2 or 3, characterised in that a counter (Z1) adds the playing time obtained from the subcode, so that its momentary counter state corresponds always to the momentary rotational speed of the recording medium (CD), that its counter state is taken over by a first memory (SP1), when the test braking pulse is produced by setting of a first mono-flop (M1), that at the end of the test braking pulse, when the first monoflop (M1) resets, the counter state of the counter (Z1) is taken over by a second memory (SP2), that the counter states prevailing in both memories (SP1, SP2) are subtracted in a difference former (DF), that a second mono-flop (M2) is set, when the difference of the counter states is below a predetermined threshold value (X), that a third mono-flop (M3) is set, when the difference of the counter states is greater than or equal to the predetermined threshold value (X), and that either the second or the third mono-flop (M2, M3) releases a shift register (SR), reads bit-samples out of a ROM (R1) and supplies them as braking pulses to the motor (M) of the disc drive.

7. A recording and/or reproduction device according to claim 2 and 3, characterised in that a first and a second counter (Z1, Z2) adds the playing time obtained from the subcode, so that the momentary counter states always correspond to the momentary rotational speed of the recording medium (CD), that the counter state of the first counter (Z1) is taken over by a first memory (SP1), when the test braking pulse is produced by setting of a first mono-flop (M1), that at the end of the test braking pulse, when the first monoflop (M1) resets, the counter state of the second counter (Z2) is taken over by a second memory (SP2), that the counter states prevailing in both memories (SP1, SP2) are subtracted in a difference former (DF), that a second mono-flop (M2) is set, when the difference of the counter states is below a predetermined threshold value (X), that a third mono-flop (M3) is set, when the difference of the counter states is greater than or equal to the predetermined threshold value (X), and that either the second or the third mono-flop (M2, M3) releases a shift register (SR), reads the bit-samples out of a ROM (R1) and supplies them as braking pulses to the motor (M) of the disc drive.

8. A recording and/or reproduction device as claimed in claim 4 or 5 and 6 or 7, characterised in that the braking pulses are produced according to claim 6 or 7, when the counter state of the counter (Z1) is below a predetermined threshold value, that the braking pulses however are produced according to claim 8 or 9, when the counter state of the counter (Z1) is greater than or equal to the predetermined threshold value.

**Revendications**

1. Appareil d'enregistrement et/ou de reproduction pour supports d'enregistrement tournants à lecture sans contact, l'énergie de freinage nécessaire pour arrêter le support d'enregistrement tournant étant produite en fonction de la vitesse du support d'enregistrement, **caractérisé en ce** que l'énergie de freinage nécessaire pour arrêter le support d'enregistrement tournant est également produite en fonction du diamètre du support d'enregistrement.

2. Appareil d'enregistrement et/ou de reproduction selon la revendication 1, **caractérisé en ce** qu'une impulsion de freinage de test est donnée au moteur (M) de l'entraînement du disque, impulsion qui est dimensionnée de telle manière qu'elle réduit certes la vitesse du support d'enregistrement (CD) mais qu'elle ne gêne pas encore la reproduction des données, que la vitesse est mesurée avant l'impulsion de freinage de test et après l'impulsion de freinage de test et que l'impulsion de freinage est produite en fonction d'une comparaison de la vitesse avant l'impulsion de freinage de test à la vitesse après l'impulsion de freinage de test.

3. Appareil d'enregistrement et/ou de reproduction selon la revendication 1 ou 2, **caractérisé en ce** que pour un lecteur de disques compacts, un lecteur de disques vidéo ou un lecteur à CDV, la vitesse du disque est obtenue à partir du subcode qui est enregistré sur ce disque.

4. Appareil d'enregistrement et/ou de reproduction selon la revendication 3**, caractérisé en ce** qu'un compteur (Z1) additionne le temps de lecture obtenu à partir du subcode de telle manière que le niveau momentané du compteur est toujours proportionnel à la vitesse momentanée du support d'enregistrement (CD), que, pour arrêter le support d'enregistrement (CD), le compteur (Z1) est arrêté et son niveau de compteur sert d'adresse à une première mémoire morte (R1) dans laquelle des profils binaires sont mémorisés qui sont délivrés comme impulsions de freinage par un registre à décalage (SR) au moteur (M) de l'entraînement du disque.

5. Appareil d'enregistrement et/ou de lecture selon la revendication 4, **caractérisé en ce** que le niveau du compteur (Z1) sert d'adresse à une seconde mémoire morte (R2) lorsqu'il dépasse une valeur de seuil qui peut être prédéterminée, que les profils binaires mémorisés dans la seconde mémoire morte (R2) sont donnés comme impulsions de freinage par le registre à décalage (SR) au moteur (M) de l'entraînement du disque.

**6.** Appareil d'enregistrement et/ou de lecture selon la revendication 2 ou 3, **caractérisé en ce** qu'un compteur (Z1) additionne le temps de lecture obtenu à partir du subcode si bien que son niveau momentané correspond toujours à la vitesse momentanée du support d'enregistrement (CD), que son niveau est pris en charge par une première mémoire (SP1) lorsque l'impulsion de freinage de test est produite par activation d'un premier monostable (M1), qu'à la fin de l'impulsion de freinage de test, lorsque le premier monostable (M1) bascule à nouveau, le niveau du compteur (Z1) est pris en charge par une seconde mémoire (SP2), que les niveaux de compteur qui se trouvent dans les deux mémoires (SP1, SP2) sont soustraits l'un de l'autre dans un formateur de différence (DF), qu'un second monostable (M2) est activé lorsque la différence des niveaux de compteur se situe au-dessous d'une valeur de seuil (X) qui peut être prédéterminée, qu'un troisième monostable (M3) est activé lorsque la différence des niveaux de compteur est supérieure ou égale à la valeur de seuil (X) qui peut être prédéterminée et que soit le second, soit le troisième monostable (M2, M3) débloque un registre à décalage (SR) qui lit des profils binaires à partir d'une mémoire morte (M1) et les donne comme impulsions de freinage au moteur (M) de l'entraînement du disque.

**7.** Appareil d'enregistrement et/ou de lecture selon la revendication 2 ou 3, **caractérisé en ce** qu'un premier et un second compteur (Z1, Z2) additionnent le temps de lecture obtenu à partir du subcode si bien que les niveaux momentanés des compteurs correspondent toujours à la vitesse momentanée du support d'enregistrement (CD), que le niveau du premier compteur (Z1) est pris en charge par une première mémoire (SP1) lorsque l'impulsion de freinage de test est produite par activation d'un premier monostable (M1), qu'à la fin de l'impulsion de freinage de test, lorsque le premier monostable (M1) bascule à nouveau, le niveau du second compteur (Z2) est pris en charge par une seconde mémoire (SP2), que les niveaux de compteur qui se trouvent dans les deux mémoires (SP1, SP2) sont soustraits l'un de l'autre dans un formateur de différence (DF), qu'un second monostable (M2) est activé lorsque la différence des niveaux de compteur se situe au-dessous d'une valeur de seuil (X) qui peut être prédéterminée, qu'un troisième monostable (M3) est activé lorsque la différence des niveaux de compteur est supérieure ou égale à la valeur de seuil (X) qui peut être prédéterminée et que soit le second, soit le troisième monostable (M2, M3) débloque un registre à décalage (SR) qui lit des profils binaires à partir d'une mémoire morte (M1) et les donne comme impulsions de freinage au moteur (M) de l'entraînement du disque.

**8.** Appareil d'enregistrement et/ou de reproduction selon la revendication 4 ou 5 et 6 ou 7, **caractérisé en ce** que les impulsions de freinage sont produites selon la revendication 6 ou 7 lorsque le niveau du compteur (Z1) se situe au-dessous d'une valeur de seuil qui peut être prédéterminée, que les impulsions de freinage sont par contre produites selon la revendication 8 ou 9 lorsque le niveau du compteur (Z1) est supérieur ou égal à la valeur de seuil qui peut être prédéterminée.

Fig. 1

Fig. 2

Fig.3

Fig.4

Fig. 5